# FASCICULE DE BREVET EUROPEEN

(11) **EP 2 764 711 B1**
(45) Date de publication et mention de la délivrance du brevet: **19.05.2021**
(21) Numéro de dépôt: 12779115.0
(22) Date de dépôt: 04.10.2012
(51) Int. Cl.: H04R 29/00, B65G 45/00, B65G 47/00, G01R 31/28, B65G 17/12

(54) **DISPOSITIF DESTINÉ AU CONTRÔLE ET AU NETTOYAGE DE CASQUES AUDIO FILAIRES.**
VORRICHTUNG ZUR KONTROLLE UND REINIGUNG KABELGEBUNDENER AUDIOKOPFHÖRER
DEVICE FOR CONTROLLING AND CLEANING WIRED AUDIO HEADSETS

(30) Priorité: 04.10.2011 FR 1103011
(43) Date de publication de la demande: 13.08.2014
(73) Titulaire: Association des Paralysés de France APF, 80081 Amiens Cedex 2 (FR)
(72) Inventeur: DOYEN, Philippe, 80340 Bray-sur-somme (FR); LESTOQUOY, Charles, Bray-Sur-Somme 80340 (FR); DESEYNE, Patrick, 80081 Amiens cedex 2 (FR); GRARE, Sébastien, 80081 Amiens cedex 2 (FR)
(74) Mandataire: Bureau Duthoit Legros Associés
(86) Numéro de dépôt international: PCT/FR2012/052248
(87) Numéro de publication internationale: WO 2013/050709

(56) Documents cités:
- EP-A2- 1 465 320
- GB-A- 2 279 760
- JP-A- 9 207 986
- US-A- 4 788 708

## Description

La présente invention se rapporte un dispositif destiné au contrôle et au nettoyage de casques audio filaires. Le document GB 2 279 760 A décrit un dispositif de contrôle d'impédance de casques audio.

Elle concerne plus particulièrement, mais non limitativement, les casques audio filaires utilisés dans le domaine du transport aérien.

Actuellement, faute de pouvoir les recycler rapidement et correctement, bien souvent, les casques audio filaires utilisés dans le transport aérien sont broyés ou enfouis après leur utilisation. Cette solution est aujourd'hui généralisée pour les casques audio bas de gamme.

Alternativement, en particulier pour les casques de bonne facture, il est connu de recycler les casques audio manuellement.

Cependant, ces opérations demandent beaucoup de main d'œuvre et rendent l'opération relativement coûteuse.

Cette technique présente l'inconvénient de demander un temps conséquent pour recycler les casques manuellement.

L'invention s'inscrit donc dans un cadre économique et de développement durable, les casques n'ayant plus besoin d'être broyés ou enfouis et pourraient être réutilisés après leur reconditionnement.

L'invention a pour objectif de pallier les différents inconvénients précités.

Plus précisément, un objectif de l'invention est de fournir un dispositif qui permette le reconditionnement des casques audio qui soit rapide, fiable et efficace.

Dans au moins un mode de réalisation particulier de l'invention, un objectif de l'invention est de fournir une telle technique, qui permette de simplifier le reconditionnement des casques, et donc de réduire les coûts.

Un autre but de l'invention est de proposer un tel dispositif permettant d'identifier les casques à mettre au rebut des casques pouvant être réutilisés.

Un autre but de l'invention est de pouvoir traiter un grand nombre de casques en un temps limité.

Ces objectifs, ainsi que d'autres qui apparaîtront par la suite, sont atteints selon l'invention à l'aide d'un dispositif destiné au contrôle et nettoyage de casques audio filaires, chaque casque audio comprenant un repose-tête, deux écouteurs et un câble électrique relié aux écouteurs et terminé par une prise, ledit dispositif comprenant :
- des moyens de contrôle d'impédance ;
- des moyens de contrôle audio ;
- des moyens de nettoyage desdits casques ;
- des moyens d'enroulage du câble.

Selon l'invention, les moyens de contrôle d'impédance, de contrôle audio, de nettoyage et d'enroulage du câble du casque sont disposés en différents postes successifs, le dispositif présentant des moyens de convoyage aptes à acheminer les casques aux différents postes.

Selon l'invention, les moyens de convoyage comprennent deux tapis roulants parallèles entre eux, l'un dit premier convoyeur, étant apte à recevoir l'ensemble repose tête/écouteurs du casque positionné à cheval sur ledit premier convoyeur et l'autre, dit deuxième convoyeur, la prise dudit casque, lesdits deux tapis roulants étant synchronisés et écartés l'un de l'autre de façon à permettre au câble d'être librement suspendu sous l'action de son poids entre les deux tapis roulants.

De préférence le dispositif présente une rive progressive comprenant deux guides, de part et d'autre du premier convoyeur destinés à engager avec le repose-tête à proximité des écouteurs afin d'ouvrir le casque, le dispositif présentant des moyens de bridage du casque sur le premier convoyeur, disposés au dessus du premier convoyeur et destinés à coopérer avec la rive progressive lors de l'ouverture du casque.

Selon une variante, les moyens de bridage du casque comprennent une rive supérieure destinée à appuyer sur le repose-tête du casque.

Selon une autre variante, les moyens de bridage du casque sur le premier convoyeur comprennent un troisième convoyeur, dit convoyeur supérieur, disposé au-dessus du premier convoyeur, synchronisé avec le premier convoyeur, de façon à ce que ledit convoyeur supérieur écrase et bride le repose-tête du casque lors de l'ouverture du casque.

Selon un mode de réalisation avantageux permettant de diminuer les phases d'arrêts des convoyeurs, les moyens d'enroulage du casque comprennent :
- des posages rotatifs, embarqués sur ledit deuxième convoyeur, la partie supérieure de chacun des posages rotatifs, destinée à recevoir la prise du casque étant montée librement en rotation par rapport au tapis dudit deuxième convoyeur,
- un, ou de préférence, plusieurs systèmes d'entrainement motorisé, positionné(s) en des positions fixes au dessus du deuxième convoyeur, destiné(s) à engager, lors des phases d'arrêt du deuxième convoyeur, avec chacun des posages rotatifs pour provoquer leur rotation et ainsi l'enroulement du câble sur des supports du posage rotatif.

Alternativement les moyens d'enroulage du câble du casque peuvent comprendre un chariot monté sur des moyens de guidage en translation verticale, le chariot étant équilibré par des contrepoids, une fourchette comprenant des doigts étant montée en rotation sur ledit chariot, apte à être actionnée en rotation sur son axe par un moteur pour provoquer l'enroulement du câble.

Préférentiellement, les moyens de contrôle d'impédance comprennent des moyens de connexion électriques aptes à coopérer avec la prise du casque de façon à faire passer un courant électrique à travers le câble dudit casque et des moyens de mesure d'impédance.

Selon un aspect avantageux de l'invention, les moyens de contrôle audio comprennent des moyens de connexion électrique à la prise du casque, et des moyens aptes à envoyer un signal d'une fréquence déterminée ainsi que deux micros aptes à capter le son émis par les écouteurs dudit casque.

Selon un mode de réalisation, les moyens de nettoyage comprennent des moyens de soufflage.

Selon une approche particulièrement simple, les moyens de nettoyage comprennent des moyens de brossage.

Avantageusement, selon un mode de réalisation, les moyens de nettoyage comprennent des moyens d'application d'une solution désinfectante telle qu'une solution hydro-alcoolique.

Selon un aspect avantageux de l'invention, les moyens d'application d'une solution désinfectante peuvent être aptes à imprégner les moyens de brossage de ladite solution désinfectante.

Selon un mode de réalisation, un dispositif de pose d'un lien est apte à disposer un lien sur le câble enroulé par lesdits moyens d'enroulage du câble du casque.

Selon un mode de réalisation, le dispositif présente des moyens, notamment pneumatiques ou robotiques, pour évacuer les casques ayant échoué à un test de contrôle d'impédance mis en œuvre par lesdits moyens de contrôle d'impédance et/ou un test de contrôle audio mis en œuvre par lesdits moyens de contrôle audio, ou encore pour évacuer les casques après les opérations d'enroulage, de dépose du twist ou du nettoyage si celles-ci n'ont pas été réalisées correctement.

L'invention concerne également une installation comprenant un ou plusieurs dispositifs et des moyens d'emballage aptes à conditionner les casques contrôlés et nettoyés par le(s)dit(s) dispositif(s).

Préférentiellement, l'utilisation du dispositif ou de l'installation est réalisée dans le domaine du transport aérien en vue de la réutilisation des casques audio.

D'autres caractéristiques et avantages de l'invention apparaîtront plus clairement à la lecture de la description suivante d'un mode de réalisation particulier de l'invention, donnée à titre de simple exemple illustratif et non limitatif, et des dessins annexés, parmi lesquels :
- la figure 1 est une vue en perspective d'un dispositif de recyclage selon l'invention ;
- les figures 2, 3 et 4 illustrent les convoyeurs du dispositif selon l'invention ;
- les figures 5, 6 et 7 sont des vues détaillées des convoyeurs selon l'invention;

- les figures 8 et 9 illustrent les moyens de contrôle d'impédance ;
- la figure 10 illustre les moyens de contrôle audio ;
- les figures 11 et 12 illustrent les moyens de nettoyage ;
- les figures 13 et 14 représentent les moyens d'enroulage du câble ;
- les figures 15, 16 et 17 illustrent également les moyens d'enroulage du câble,
- les figures 18 à 19 représentent une alternative avantageuse aux moyens d'enroulage présentés aux figures 13 et 14, comprenant des posages rotatifs, embarqués sur le deuxième convoyeur, et des systèmes d'entrainement motorisés, disposés en des positions fixes, pour la mise en rotation des posages rotatifs,
- la figure 21 illustre le système de dévêtissage permettant de retirer le toron de câble enroulé sur le posage rotatif des figures 18 et 19,
- la figure 22 illustre un robot agencé pour saisir le casque et le toron de câble afin de les réunir.

Comme précédemment évoqué, le principe général de l'invention repose donc sur la mise en œuvre d'un dispositif de reconditionnement de casques audio filaires.

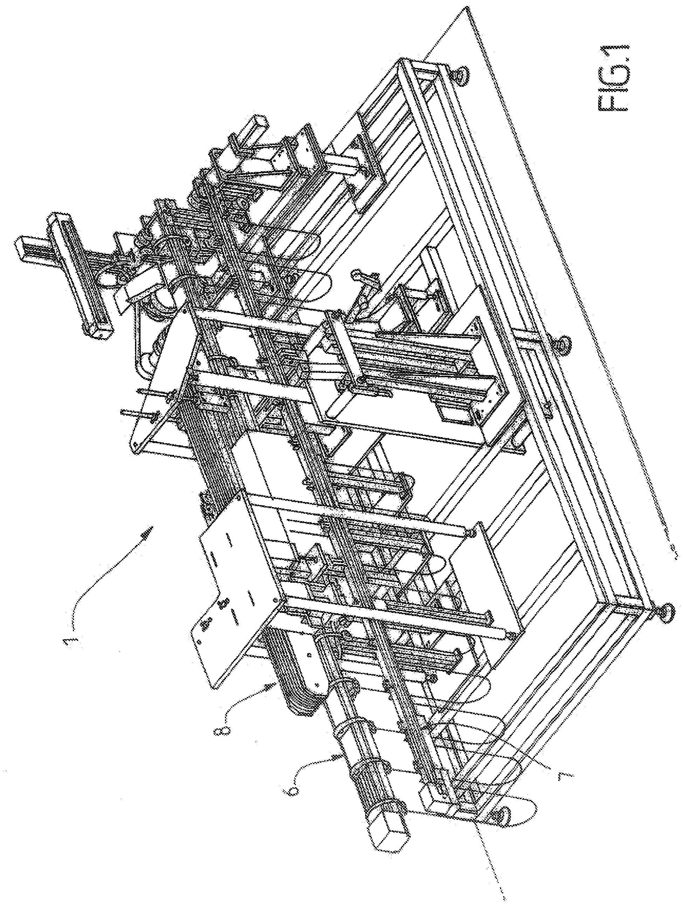

Le dispositif, illustré à la figure 1, comprend des moyens de contrôle d'impédance, des moyens de contrôle audio, des moyens de nettoyage des casques et des moyens d'enroulage du câble du casque audio.

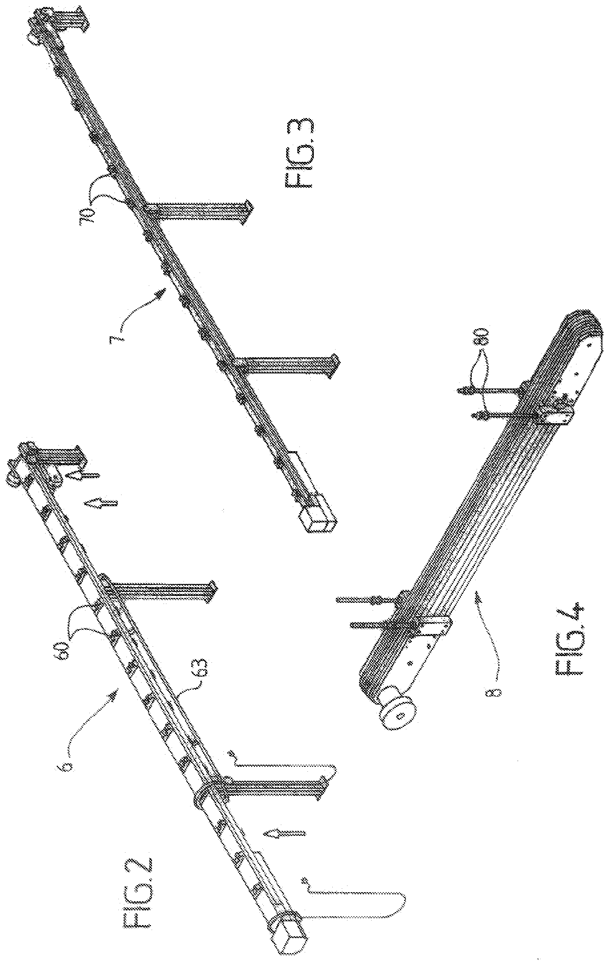

Comme on peut le voir sur la figure 1, le dispositif comprend également trois convoyeurs 6, 7, 8. Le premier convoyeur 6, dit convoyeur casque et illustré figure 2, est formé d'une structure support 61 équipée d'un guide courroie et d'une courroie 62. Ce convoyeur 6 est destiné à recevoir les repose-tête 11 des casques 10 par le biais de supports de forme 60 solidaires de la courroie 62, répartis sur la courroie 62 à espaces réguliers. Chaque casque 10 est ainsi positionné à cheval sur le premier convoyeur 6, en appui par l'intermédiaire du repose-tête 11 sur le support de forme 60 correspondant, les écouteurs 12 positionnés de part et d'autre du convoyeur 6.

Le deuxième convoyeur 7, dit convoyeur connecteur, est également formé d'une structure support 71 équipée d'un guide courroie et d'une courroie 72. Ce convoyeur 7 est destiné à recevoir les prises 14 du casque 10 par le biais de porte-connecteurs 70 disposés tout le long du convoyeur 7.

Préférentiellement les porte-connecteurs 70 sont solidaires de la courroie 72 du deuxième convoyeur 7 et sont répartis à espaces réguliers, positionnés en vis- à vis des supports de forme 60 du premier convoyeur 6. Le deuxième convoyeur 7 est disposé parallèlement au premier convoyeur 6, les convoyeurs 6, 7 étant écartés l'un de l'autre de façon à laisser pendre le câble 13 librement sous l'action de son poids entre les deux convoyeurs 6 et 7. Un dégagement suffisant entre et au-dessous des deux convoyeurs 6 et 7 est prévu à cet effet.

Un troisième convoyeur 8, dit convoyeur supérieur, est disposé au-dessus, et en retrait, du premier convoyeur 6, de façon à écraser et brider le repose-tête 11 du casque 10 et ainsi écarter les écouteurs 12 du casque 10 au cours du cheminement du casque, en coopération avec une rive progressive 63.

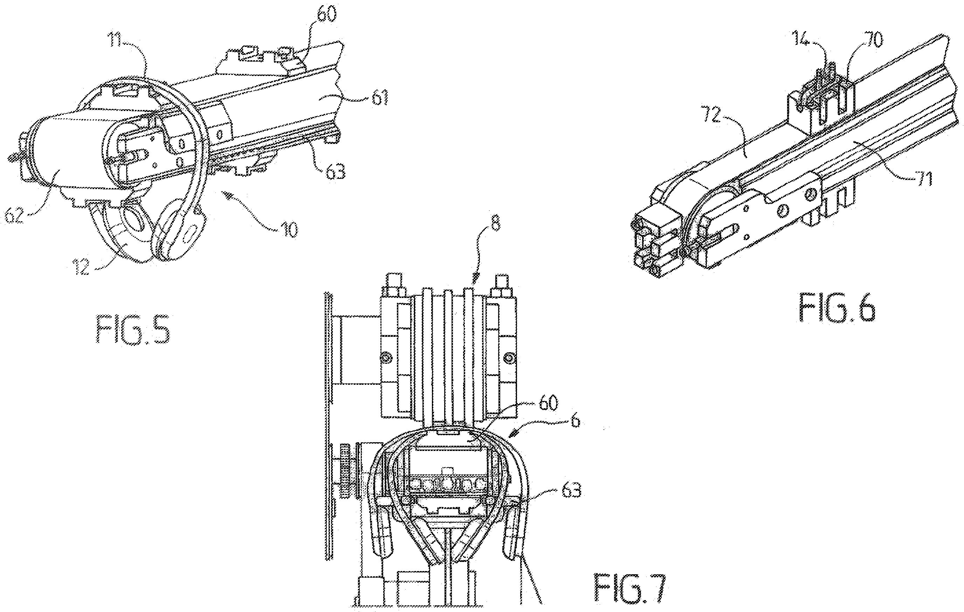

Selon un mode de réalisation non illustré, le troisième convoyeur 8 peut être remplacé par une rive supérieure destinée à brider le casque sur le premier convoyeur. Ouvrir le casque permet de faciliter le bon positionnement des écouteurs en vis-à-vis d'écouteurs 37 des moyens 3 de contrôle audio. Comme illustrée à la figure 7, la hauteur de ce troisième convoyeur 8 (ou de la rive supérieure) peut être réglée par le biais de moyens de réglage 80 (i.e système vis/écrou) de façon à ajuster la pression exercée sur le repose-tête 11 des casques 10.

La rive progressive 63 est disposée de chaque coté du premier convoyeur 6 de façon à maintenir le casque 10 « ouvert ». Un moteur, non représenté, est chargé de transmettre le mouvement de rotation aux trois convoyeurs, voire aux deux convoyeurs, par le biais de transmissions adaptées (i.e transmission par courroies et poulies).

Avantageusement, un seul moteur actionne les trois convoyeurs (ou les deux convoyeurs dans le cas de la rive supérieure) de façon à ce que ces derniers soient synchronisés entre eux.

Selon une autre alternative, chaque convoyeur peut présenter son propre moteur, la synchronisation des convoyeurs 6, 7 et/ou 8 étant alors réalisée de manière électronique.

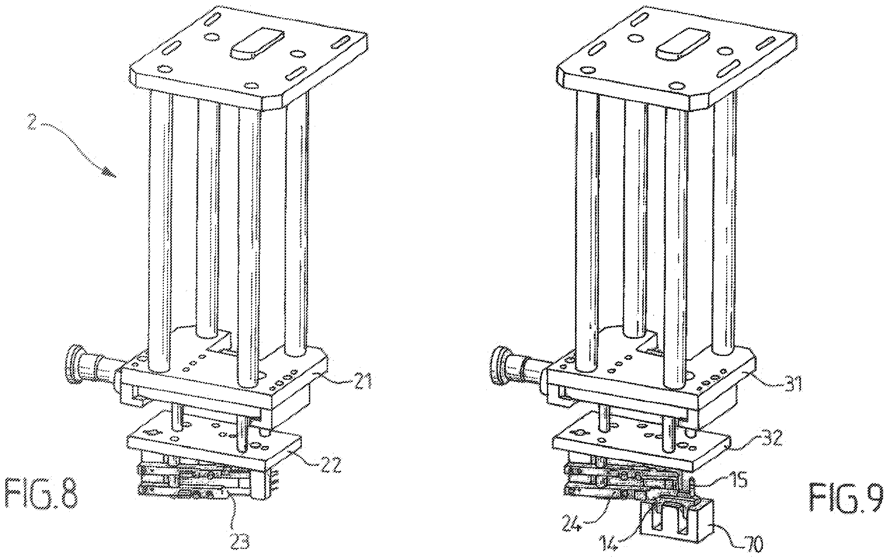

Les moyens 2 de contrôle d'impédance, illustrés aux figures 8 et 9, comprennent un tiroir 21 pour mettre en place une tête de contrôle 22 comprenant des moyens de connexion électrique, notamment des touches conductrices 23 montées sur un système à ressort apte à venir en contact avec les contacts disposés sur les fiches « jack » 15. Une fois la tête de contrôle 22 et le connecteur 14 connectés, un courant électrique est envoyé à travers le câble 13 pour vérifier son intégrité.

Le tiroir 21 permet avantageusement de démonter rapidement la tête de contrôle 22 et ainsi d'adapter la tête de contrôle en fonction de la prise 14 du casque.

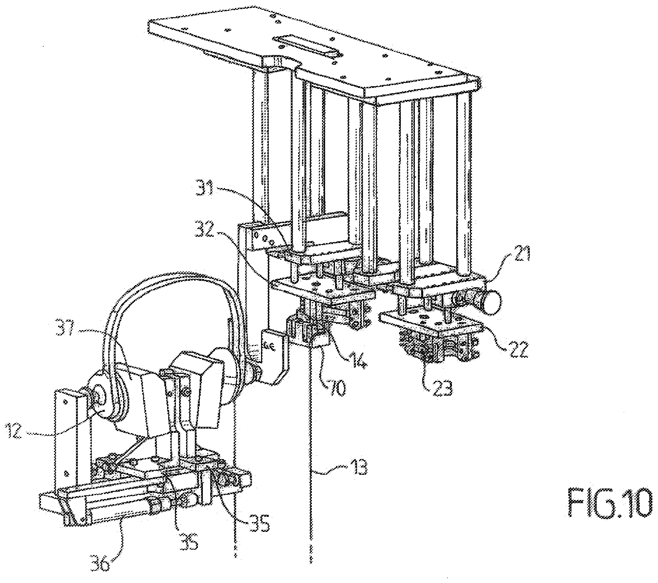

Les moyens 3 de contrôle du son, illustrés figure 10, comprennent un système de contrôle de la prise 14, identique à celui des moyens de contrôle d'impédance.

Les moyens 3 de contrôle comprennent un tiroir 31 pour mettre en place une tête de contrôle 32 démontable rapidement et comprenant des moyens de connexion électrique, notamment des touches conductrices 24 montées sur un système à ressort apte à venir en contact avec les contacts disposés sur les fiches «jack» 15. Ces moyens 3 de contrôle du son comprennent également un système de double chariot 35 monté sur un guide, notamment à billes prismatiques, et actionné par vérin 36 pneumatique destiné à mettre en contact les écouteurs 12 du casque 10 avec les deux micros 37 montés respectivement sur les deux chariots. Le casque positionné au niveau des moyens 3, le vérin 36 est actionné, écartant les deux micros 37 l'un l'autre, jusqu'à leur mise en contact avec les écouteurs 12. Une fois la tête de contrôle 32 et la prise 14 connectées, un signal d'une fréquence déterminée est envoyé à travers le câble 13 pour vérifier le bon fonctionnement des écouteurs 12. Les micros 37 permettent de capter le son émis par les écouteurs 12 du casque 1. Un analyseur de son permet de vérifier que le son capté correspond bien au signal d'excitation et plus particulièrement que le son émis est à la fréquence déterminée.

Selon un mode de réalisation en particulier de l'invention, les supports micros 37 peuvent être montés sur pivot pour adapter l'appui sur les écouteurs 12.

De manière avantageuse, les touches conductrices 22 et 23 sont aux nombres de deux ou trois suivant le type de fiche « jack » présente, les fiches « jack » mono comportant deux contacts et les fiches « jack » stéréo trois contacts. Préférentiellement, les touches conductrices sont constituées de cuivre, cependant tout autre matériau conducteur d'électricité peut convenir.

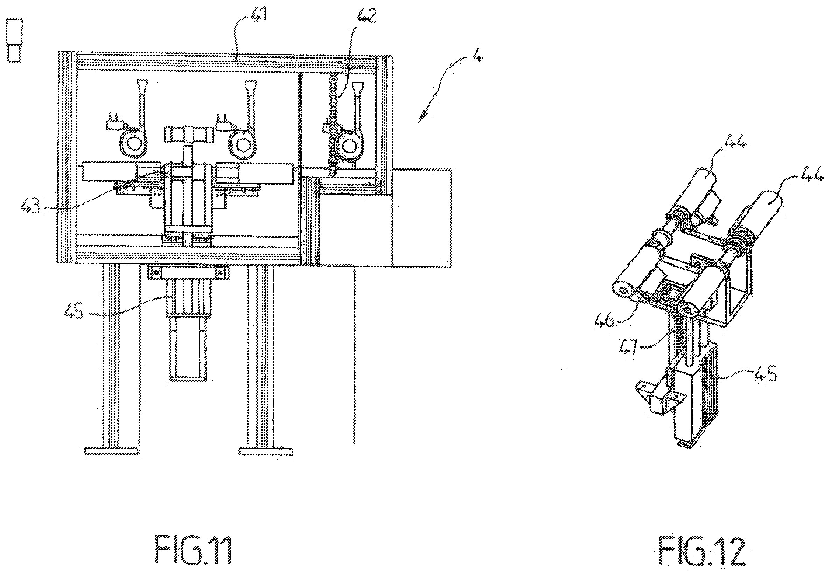

Les moyens 4 de nettoyage des casques, représentés à la figure 11, comprennent deux postes, un premier poste équipé de moyens 42 de soufflage et un deuxième poste équipé de moyens 43 de brossage. Les moyens 4 de nettoyage sont formés d'un carter 41 séparé en deux pour départager le poste de soufflage du poste de brossage.

Ainsi, le poste de soufflage est équipé de moyens 42 de soufflage tels que des buses destinées à projeter de l'air comprimé sur les casques 10. De manière avantageuse, des moyens de récupération de la poussière peuvent être prévus pour éviter que celles-ci ne se déposent à nouveau sur le casque 10.

Selon un mode de réalisation particulier de l'invention, les buses de projection d'air comprimé peuvent être orientables.

Le poste de brossage, détaillé à la figure12, comprend des rouleaux 44 disposés horizontalement et montés sur des moyens 45 de translation se déplaçant, verticalement et/ ou horizontalement, tels qu'un système de monte et baisse pneumatique coopérant avec une crémaillère 47 et un système d'engrenage destiné à faire tourner les rouleaux 44 lors du mouvement de translation. Le poste de brossage comprend également des moyens 46 d'application d'une solution désinfectante tels que des buses disposées de manière fixe par rapport aux rouleaux, un flacon étant disposé en partie supérieure du bâti et alimentant les moyens 46 d'application de la solution désinfectante par gravité. Avantageusement, une électrovanne est installée sur le circuit d'alimentation en solution désinfectante, non représentée, pour permettre l'arrêt de l'alimentation des buses.

Selon un mode de réalisation particulier de l'invention, le système d'engrenage peut être installé de façon à faire tourner les rouleaux du côté droit dans le sens opposé des rouleaux du côté gauche.

Selon un autre mode de réalisation de l'invention, un moteur électrique peut être disposé dans le poste de brossage de façon à faire tourner les rouleaux en continu.

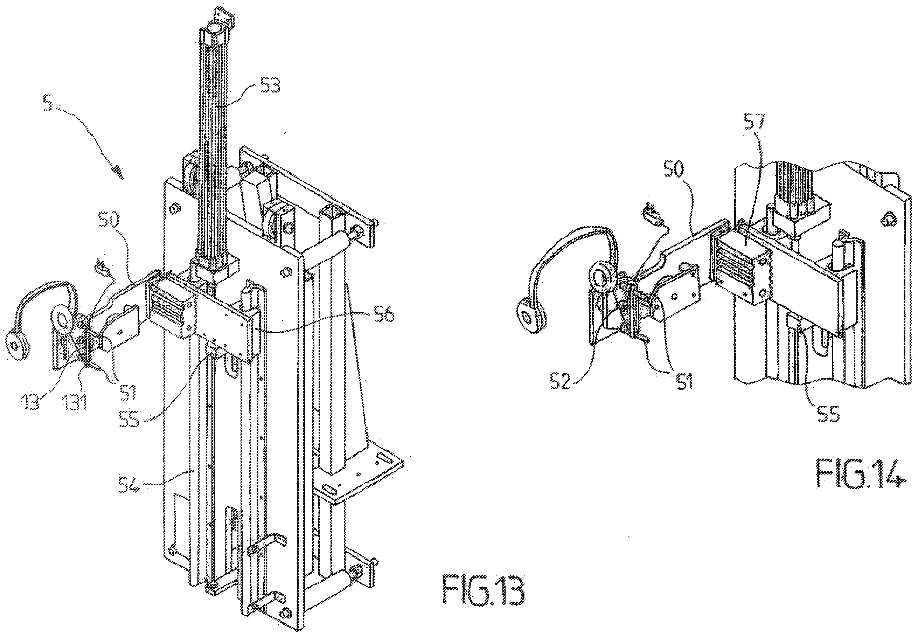

Les moyens 5 d'enroulage, représentés figures 13 et 14, comprennent un chariot 50 monté sur des moyens de guidage en translation verticale, tels que des douilles à billes 56 coulissant sur des rails 54, et équilibré par des contrepoids. Sur le chariot 50 sont montés des doigts 51 sur un axe de rotation 52 et actionné par un moteur, formant ainsi une fourchette apte à enrouler le câble 13 lors de la rotation des doigts 51.

Une butée 55, disposée en partie basse, permet d'arrêter le chariot 50 en position basse et d'attendre le casque suivant. Cette butée 55 est descendue lorsque le casque 10 est en position, pour que le chariot 50 tende le câble vers le bas, dans un premier temps. Successivement, la fourchette est entraînée en rotation sur son axe pour enrouler le câble 13.

La rotation de la fourchette tire sur le câble 13 et force ainsi le chariot 50 à la montée. Ledit système de contrepoids permet de limiter la tension sur le câble 13 du casque 10 lors de cette opération. En fin d'opération, le câble 13 est enroulé sous forme d'un toron 131, tel qu'illustré à la figure 13.

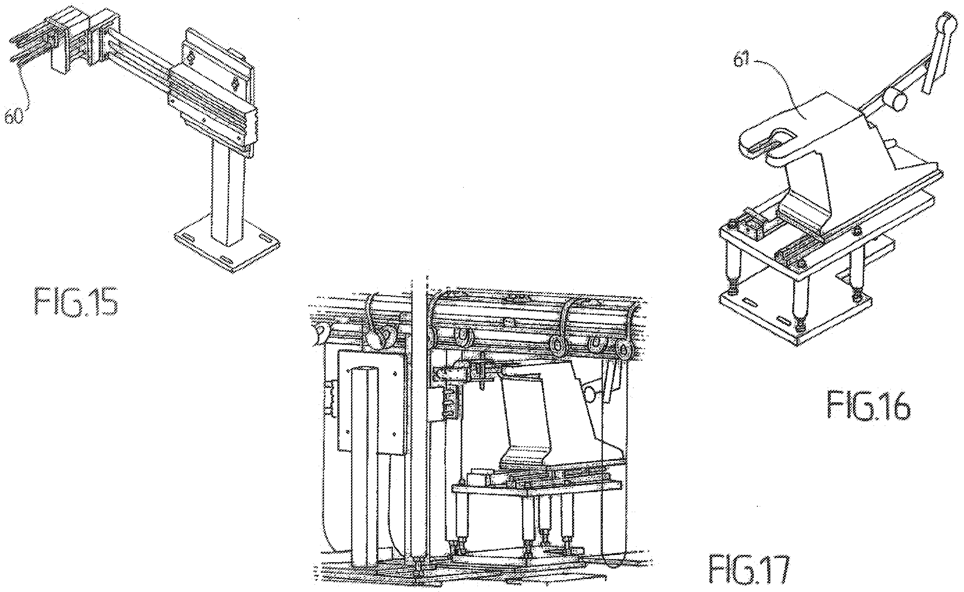

Des moyens de manipulation pneumatiques, représentés figure 15, tels qu'une pince pneumatique 60 permettent de faire la liaison entre le poste d'enroulage et la mise en place d'un lien au moyen d'un dispositif de pose d'un lien 61, encore appelé twisteuse, représenté à la figure 16, pour maintenir le toron 131 en place.

Un levier permet d'indexer le chariot 50 toujours à une même hauteur, pour que la pince 60 puisse prendre le toron 131 au même niveau, un vérin 57 permettant de dévêtir le câble enroulé sur les doigts 51 lorsque la pince 60 de transfert a pris le toron.

Des moyens de déchargement sont également prévus selon que le casque 10 soit fonctionnel ou non. Ainsi, si le casque 10 est considéré comme non fonctionnel, des moyens de manipulation, notamment pneumatiques ou robotisés, tels qu'une pince ou tout autre moyen apte à saisir le casque, se saisissent du casque et le décharge sur une goulotte d'évacuation, un vérin étant chargé de déclipser le connecteur de son support. Un casque 1 est notamment considéré comme non fonctionnel lorsque celui-ci échoue le test d'impédance et/ou le test de contrôle audio mentionnés plus haut et/ou est non twisté. Les casques non fonctionnels ne seront pas recyclés et pourront être mis au rebut.

Dans le cas où le casque 10 est considéré comme fonctionnel, des moyens de préhension tels qu'une pince peuvent éventuellement prendre le casque 10 et font ensuite descendre le casque 10 sur une butée de façon à faire pivoter les écouteurs sur l'intérieur et à poser le casque 10 à plat sur un convoyeur de conditionnement.

Un casque 1 est considéré comme fonctionnel lorsqu'il passe avec succès le test de contrôle d'impédance et le test de contrôle audio mentionnés plus haut. Les casques fonctionnels seront avantageusement recyclés.

Le dispositif pour le recyclage des casques audio selon l'invention fonctionne en continu et comme suit.

L'opérateur pose dans un premier temps le repose-tête 11 et la prise 14 sur leur support respectif 60, 70 disposé sur chaque convoyeur 6, 7 et s'assure que la fiche 15 escamotable du connecteur est bien en positon de contrôle, le casque et le connecteur se déplaçant alors de manière synchronisée.

Le casque rencontre dans un premier temps le convoyeur supérieur 8 qui va venir exercer une pression sur le repose-tête afin de brider et ouvrir le casque. Cette ouverture du casque est complétée et accompagnée par l'intermédiaire de la rive progressive 63. Cette rive 63 comprend deux guides, de part et d'autre du premier convoyeur 6, qui engagent respectivement avec le repose-tête à proximité des écouteurs 12.

Le casque 10 et le connecteur 14 marquent un premier arrêt au niveau du poste de contrôle d'impédance. La tête de contrôle 22 équipée de touches conductrices 23 réalise le contact avec les fiches « jack » afin de simuler un branchement et faire circuler un courant électrique à travers le câble. Les touches conductrices 23 viennent en contact avec les fiches « jack » 25 lorsque le convoyeur avance d'un pas pour positionner le casque au niveau du poste de contrôle, les fiches « jack » 25 repoussant alors les touches conductrices 23 et le système à ressort les maintenant en contact. Un moyen électronique mesure l'impédance du casque et compare l'impédance mesurée à l'impédance nominale du casque. Dans le cas où l'impédance mesurée satisfait une plage de tolérance d'impédance, le contrôle est considéré comme satisfaisant. Autrement le casque audio est considéré comme non fonctionnel.

Dans le cas où le contrôle d'impédance s'avère positif, le casque 10 et le connecteur 14 sont déplacés jusqu'au poste suivant, à savoir le poste de contrôle audio. La même opération qu'au poste précédent est réalisée pour connecter la prise 14 aux touches conductrices 24. De plus, les écouteurs 12 sont positionnés contre des micros 37. Une fois la connexion réalisée, un signal d'une fréquence déterminée est envoyé à travers le câble 13.

Si les micros 37 disposés contre les écouteurs 12 reçoivent un signal analysé comme satisfaisant, le casque 10 est considéré comme fonctionnel. Dans le cas contraire, le casque 10 est considéré comme un rebut.

Après le contrôle audio, le casque est acheminé jusqu'au poste de nettoyage. Le casque passe dans un premier compartiment entre des buses projetant de l'air comprimé afin de le débarrasser des poussières, une bouche d'aspiration étant prévue pour récupérer les poussières.

Le casque passe ensuite dans le deuxième compartiment équipé de rouleaux pour brosser l'intérieur des écouteurs et appliquer une solution hydro-alcoolique. Les rouleaux sont imprégnés régulièrement d'une solution hydro-alcoolique par le biais de buses fixes disposées à proximité des rouleaux. Les rouleaux 44 sont déplacés de bas en haut contre les écouteurs 12 pour nettoyer ces derniers.

Le casque est ensuite acheminé jusqu'au poste d'enroulage. La fourchette des moyens d'enroulage 5 saisit le câble toujours pendant et le tire vers le bas. Successivement la fourchette est entraînée en rotation sur son axe pour enrouler le câble 13.

La rotation de la fourchette tire sur le câble 13 et force ainsi le chariot 50 des moyens 5 à la montée jusqu'à la formation du toron 131.

La pince pneumatique 60 saisit alors le toron 131 et successivement le vérin 57 est actionné pour dévêtir le toron 131 de la fourchette des moyens d'enroulage 5.

La pince pneumatique 60 assure alors le transfert du toron 131 jusqu'au dispositif de pose d'un lien 61, à savoir la twisteuse 61. Cette twisteuse pose un lien autour du toron 131 afin de le maintenir. La pince pneumatique 60 peut alors relâcher le toron 131.

Bien entendu, les casques ayant échoué au test d'impédance et/ou test audio seront évacués par tous moyens adaptés, tels que moyens pneumatiques.

Selon le mode de réalisation, décrit précédemment les moyens d'enroulage illustrés aux figures 13 et 14 réalisent la totalité de l'enroulage en une position fixe, pendant une seule phase d'arrêt du deuxième convoyeur 7.

En fonction de la longueur du câble, les inventeurs ont constaté que cette étape d'enroulage était bien souvent la plus longue, et de ce fait, ralentissait la cadence de tout le dispositif en imposant des temps d'arrêt trop importants entre chaque phase d'avance des convoyeurs 6,7 et/ou 8.

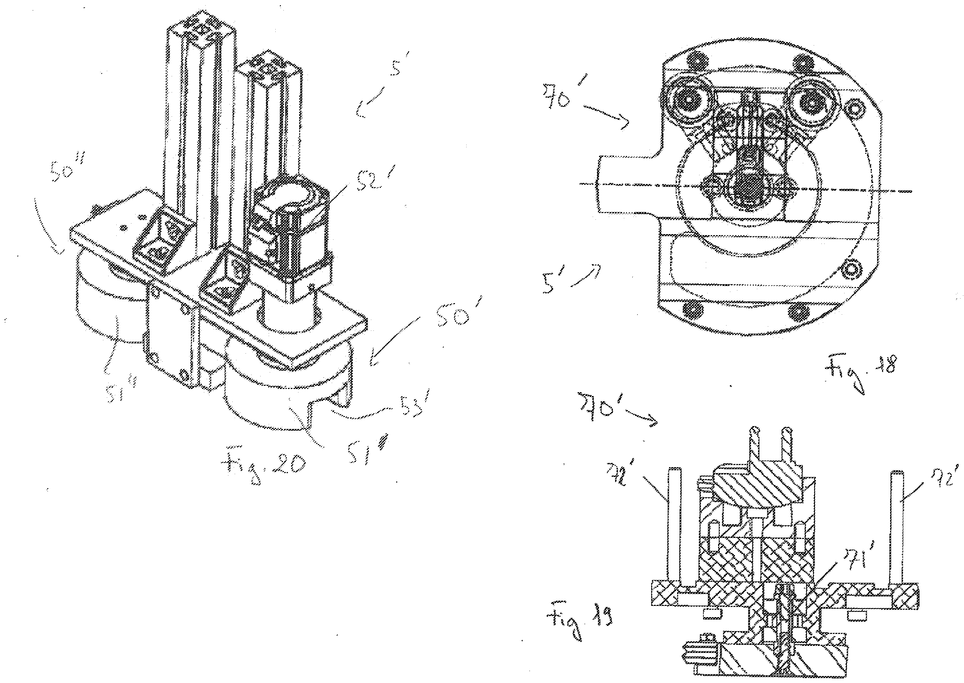

Les inventeurs ont pallié ce problème en remplaçant les moyens d'enroulage des figures 13 et 14 par ceux présentés aux figures 18 à 20.

A cet effet, les porte-connecteurs 70, rigidement solidaires de la bande du deuxième convoyeur 7 sont remplacés par des posages rotatifs 70' illustrés aux figures 18 et 19.

La partie supérieure de chaque posage 70' permet de recevoir la prise du casque et est montée librement de rotation autour d'un axe 71', vertical, notamment par l'intermédiaire de roulements à billes.

De ce fait la partie supérieure de chaque posage est embarquée avec la bande du convoyeur 7, mais est libre de rotation autour de l'axe 71'.

Un, ou de préférence plusieurs systèmes d'entrainement motorisé 50',50", positionné(s) en des positions fixes au dessus du deuxième convoyeur 7 sont alors destiné(s) à engager, lors des phases d'arrêt du deuxième convoyeur 7, avec chacun des posages rotatifs pour provoquer leur rotation, et ainsi, l'enroulement du câble sur des supports 72' du posage rotatif 70'.

Lorsqu'à l'aplomb du posage rotatif 70', le système d'entrainement motorisé 50' peut comprendre une cloche 51' destinée à engager avec la partie supérieure du posage rotatif 70'. Plus particulièrement, lors de l'avance du convoyeur 7 le posage rotatif 70 est guidé dans une encoche d'entrainement 53' de la cloche 51'.

A l'arrêt du convoyeur 7, la cloche 51', alors en prise avec le posage 70', est actionnée en rotation par le moteur 52' et provoque la rotation du posage 70', et ainsi l'enroulement du câble sur des supports (i.e des tiges 72') de la partie supérieure du posage 70'.

Avantageusement en prévoyant plusieurs (notamment deux) systèmes d'entrainement motorisés 50',50" disposés en autant de positions fixes, l'enroulage complet du câble peut être effectué sur plusieurs phases d'arrêts du convoyeur 7, et non seulement sur une seule phase d'arrêt.

La tension du câble peut être assurée par un vérin exerçant une pression contrôlée entre le premier convoyeur 6 et le deuxième convoyeur 7, et ainsi garantir une tension minimale sur les tiges 72' du posage rotatif.

Des cames ajustées peuvent être placées dans l'axe du deuxième convoyeur 7 , le long de ce dernier, afin de bloquer la rotation des posages rotatifs lorsque ceux-ci ne sont pas en prise avec le ou les systèmes d'entrainement 50',50".

L'opération, une fois terminée, permet d'obtenir un toron de câble dont la tension et le positionnement sur le posage 70' sont maitrisés.

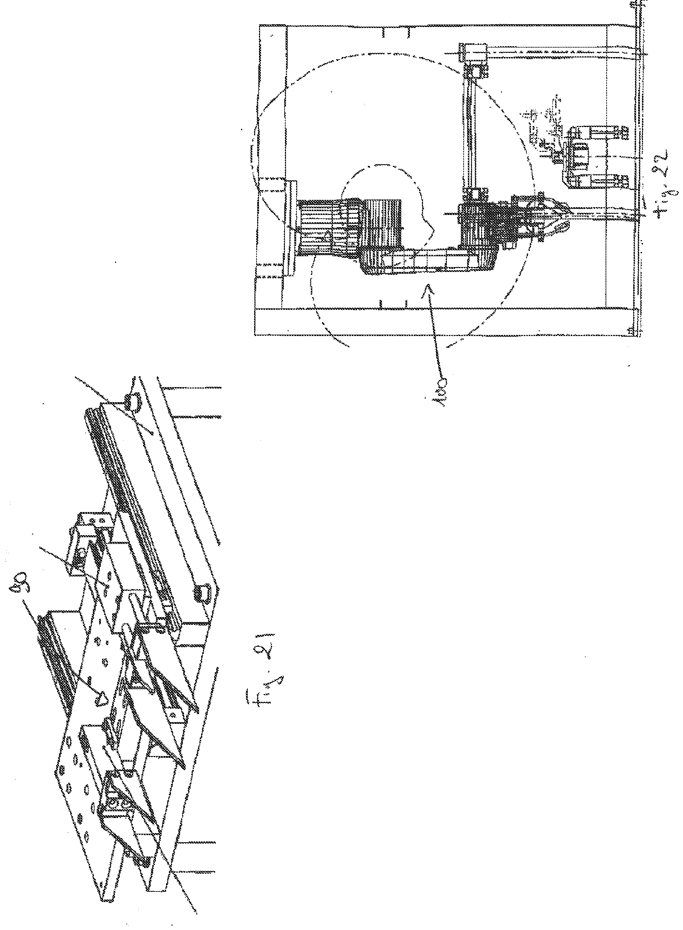

Des moyens 90, notamment pneumatiques, représentés, figure 21, permettent de venir dévêtir le toron de câble desdits posages rotatifs 70'. Ces opérations de dévêtissage sont contrôlées par le biais d'un vérin pneumatique, en référence à un axe donné du posage, dans le but de ne pas endommager le toron ou la prise. Ces opérations ont pour but de finaliser la préparation et le regroupement du toron avec le repose-tête du casque.

Des moyens de déchargement sont également prévus dans le but de réunir le toron et le repose-tête du casque. Le déchargement du toron peut être assuré par un ou plusieurs actionneurs, notamment pneumatiques, équipés de pince(s) afin d'amener l'ensemble toron et prise à une certaine hauteur. Le déchargement du repose-tête à partir du premier convoyeur 6 peut être assuré par un robot 100, notamment six axes, illustré à la figure 22 muni d'une pince pneumatique et d'un système pour la mise en référence du casque.

Les actionneurs pneumatiques et le robot travaillent de concert pour venir regrouper l'ensemble toron/prise et repose-tête. Une fois le toron/prise et le repose-tête regroupés, la pince du robot saisit cet ensemble. Un lien (twist) est alors appliqué sur l'ensemble par un dispositif de pose d'un lien.

L'invention concerne également une installation comprenant un ou plusieurs dispositif(s) conforme à l'invention et des moyens d'emballage aptes à conditionner les casques contrôlés et nettoyés par le(s)dit(s) dispositif(s).

Les moyens d'emballage peuvent être constitués par un dispositif de mise sous film, unique, qui sera alimenté par un ou plusieurs dispositifs 1 conformes à l'invention, disposés en parallèle.

## Revendications

1. Dispositif destiné au contrôle et nettoyage de casques audio filaires, chaque casque audio comprenant un repose-tête, deux écouteurs et un câble électrique relié aux écouteurs et terminé par une prise, **caractérisé en ce que** ledit dispositif comprend :
- des moyens (2) de contrôle d'impédance ;
- des moyens (3) de contrôle audio ;
- des moyens (4) de nettoyage desdits casques ;
- des moyens (5; 5') d'enroulage du câble du casque
et dans lequel les moyens de contrôle d'impédance, de contrôle audio, de nettoyage et d'enroulage du câble du casque sont disposés en différents postes successifs, ledit dispositif présentant des moyens de convoyage aptes à acheminer les casques aux différents postes, comprenant deux tapis roulants parallèles entre eux, l'un dit premier convoyeur (6), étant apte à recevoir l'ensemble repose tête/écouteurs du casque positionné à cheval sur ledit premier convoyeur et l'autre, dit deuxième convoyeur (7), la prise dudit casque, lesdits deux tapis roulants (6,7) étant synchronisés et écartés l'un de l'autre de façon à permettre au câble d'être librement suspendu sous l'action de son poids entre les deux tapis roulants (6,7).

2. Dispositif selon la revendication 1, présentant une rive progressive (63) comprenant deux guides, de part et d'autre du premier convoyeur (6), destinés à engager avec le repose-tête à proximité des écouteurs (12) afin d'ouvrir le casque, le dispositif présentant des moyens de bridage du casque sur le premier convoyeur (6), disposés au dessus du premier convoyeur (6) et destinés à coopérer avec la rive progressive (63) lors de l'ouverture du casque.

3. Dispositif selon la revendication 2 dans lequel les moyens de bridage du casque comprennent une rive supérieure destinée à appuyer sur le casque.

4. Dispositif selon la revendication 2 dans lequel les moyens de bridage du casque sur le premier convoyeur comprennent un troisième convoyeur (8), dit convoyeur supérieur, disposé au-dessus du premier convoyeur (6), synchronisé avec le premier convoyeur, de façon à ce que ledit convoyeur supérieur écrase et bride le repose-tête du casque lors de l'ouverture du casque.

5. Dispositif selon l'une des revendications 1 à 4, dans lequel les moyens d'enroulage (5') du casque comprennent :
- des posages rotatifs (70'), embarqués sur ledit deuxième convoyeur (7), la partie supérieure de chacun des posages rotatifs, destinée à recevoir la prise du casque étant montée librement en rotation par rapport au tapis dudit deuxième convoyeur (7),
- un, ou de préférence, plusieurs systèmes d'entrainement motorisé (50',50"), positionné(s) en des positions fixes au dessus du deuxième convoyeur (7), destiné(s) à engager, lors des phases d'arrêt du deuxième convoyeur (7), avec chacun des posages rotatifs pour provoquer leur rotation et ainsi l'enroulement du câble sur des supports (72') du posage rotatif (70'),

6. Dispositif selon l'une des revendications 1 à 5, dans lequel les moyens de contrôle d'impédance comprennent des moyens de connexion électrique aptes à coopérer avec la prise du casque de façon à faire passer un courant électrique à travers le câble dudit casque et des moyens de mesure d'impédance ;

7. Dispositif selon l'une des revendications 1 à 6 dans lequel les moyens de contrôle audio comprennent des moyens de connexion électrique à la prise du casque, et des moyens aptes à envoyer un signal d'une fréquence déterminée ainsi que deux micros aptes à capter le son émis par les écouteurs dudit casque.

8. Dispositif selon l'une des revendications 1 à 7, dans lequel les moyens de nettoyage comprennent des moyens de soufflage.

9. Dispositif selon l'une des revendications 1 à 8, dans lequel les moyens de nettoyage comprennent des moyens de brossage.

10. Dispositif selon l'une des revendications 1 à 9, dans lequel les moyens de nettoyage comprennent des moyens d'application d'une solution désinfectante telle qu'une solution hydro-alcoolique.

11. Dispositif selon les revendications 9 et 10, les moyens d'application d'une solution désinfectante sont aptes à imprégner les moyens de brossage de ladite solution désinfectante.

12. Dispositif selon l'une des revendications 1 à 4 et 6 à 11, dans lequel les moyens (5) d'enroulage du câble du casque comprennent un chariot (50) monté sur des moyens de guidage en translation vertical, le chariot (50) étant équilibré par des contrepoids, une fourchette comprenant des doigts (51) étant montée en rotation sur ledit chariot (50), apte à être actionnée en rotation sur son axe par un moteur pour provoquer l'enroulement du câble (13).

13. Dispositif selon l'une des revendications 1 à 12 présentant un dispositif de pose d'un lien (61), apte à disposer un lien sur le câble enroulé par lesdits moyens d'enroulage du câble du casque.

14. Dispositif selon l'une des revendications 1 à 13 présentant des moyens, notamment pneumatiques ou robotiques, pour évacuer les casques ayant échoués à un test de contrôle d'impédance mis en œuvre par lesdits moyens de contrôle d'impédance et/ou un test de contrôle audio mis en œuvre par lesdits moyens de contrôle audio, ou encore pour évacuer les casques après les opérations d'enroulage, de dépose du twist ou du nettoyage si celles-ci n'ont pas été réalisées correctement.

15. Installation comprenant un ou plusieurs dispositifs selon l'une des revendications 1 à 14 et des moyens d'emballage aptes à conditionner les casques contrôlés et nettoyés par ledit ou lesdits dispositifs.

## Patentansprüche

1. Vorrichtung, die zur Prüfung und Reinigung verkabelter Audiokopfhörer bestimmt ist, wobei jeder Audiokopfhörer einen Kopfbügel, zwei Hörer und ein Stromkabel, das mit den Hörern verbunden ist und in einem Anschluss endet, umfasst, **dadurch gekennzeichnet, dass** die Vorrichtung umfasst:
- Mittel (2) zur Impedanzprüfung;
- Mittel (3) zur Audioprüfung;
- Mittel (4) zur Reinigung der Kopfhörer;
- Mittel (5; 5') zum Aufrollen des Kabels des Kopfhörers
und wobei die Mittel zur Impedanzprüfung, Audioprüfung, Reinigung und zum Aufrollen des Kabels des Kopfhörers an unterschiedlichen aufeinanderfolgenden Stationen angeordnet sind, wobei die Vorrichtung Fördermittel aufweist, die dazu geeignet sind, die Kopfhörer zu den unterschiedlichen Stationen zu fördern, die zwei Laufbänder, die zueinander parallel sind, umfassen, wobei ein sogenannter erster Förderer (6) dazu geeignet ist, die Einheit aus Kopfbügel/Hörern des Kopfhörers, die rittlings auf dem ersten Förderer positioniert ist, aufzunehmen, und der andere, sogenannte zweite Förderer (7) dazu geeignet ist, den Anschluss des Kopfhörers aufzunehmen, wobei die zwei Laufbänder (6, 7) synchronisiert und voneinander derart beabstandet sind, dass es dem Kabel erlaubt ist, frei unter der Einwirkung seines Gewichts zwischen den zwei Laufbändern (6, 7) zu hängen.

2. Vorrichtung nach Anspruch 1, die eine fortlaufende Kante (63) aufweist, die zu jeder Seite des ersten Förderers (6) zwei Führungen umfasst, die dazu bestimmt sind, in den Kopfbügel in der Nähe der Hörer (12) einzugreifen, um den Kopfhörer zu öffnen, wobei die Vorrichtung Mittel zum Verflanschen des Kopfhörers auf dem ersten Förderer (6) aufweist, die oberhalb des ersten Förderers (6) angeordnet und dazu bestimmt sind, mit der fortlaufenden Kante (63) bei dem Öffnen des Kopfhörers zusammenzuwirken.

3. Vorrichtung nach Anspruch 2, wobei die Mittel zum Verflanschen des Kopfhörers eine obere Kante, die dazu bestimmt ist, auf den Kopfhörer zu drücken, umfassen.

4. Vorrichtung nach Anspruch 2, wobei die Mittel zum Verflanschen des Kopfhörers auf dem ersten Förderer einen dritten Förderer (8), sogenannten oberen Förderer, umfassen, der oberhalb des ersten Förderers (6) mit dem ersten Förderer derart synchronisiert angeordnet ist, dass der obere Förderer den Kopfbügel des Kopfhörers bei dem Öffnen des Kopfhörers zusammendrückt und verflanscht.

5. Vorrichtung nach einem der Ansprüche 1 bis 4, wobei die Mittel (5') zum Aufrollen des Kopfhörers umfassen:
- Drehablagen (70'), die auf dem zweiten Förderer (7) mitgeführt sind, wobei der obere Teil jeder der Drehablagen, der dazu bestimmt ist, den Anschluss des Kopfhörers aufzunehmen, frei drehbar in Bezug auf das Band des zweiten Förderers (7) gelagert ist,
- ein oder vorzugsweise mehrere motorisierte Antriebssysteme (50', 50"), das/die in feststehenden Positionen oberhalb des zweiten Förderers (7) positioniert ist/sind, das/die dazu bestimmt ist/sind, bei Anhaltephasen des zweiten Förderers (7) in jede der Drehablagen einzugreifen, um ihre Drehung und daher das Aufrollen des Kabels auf den Trägern (72') der Drehablage (70') zu veranlassen.

6. Vorrichtung nach einem der Ansprüche 1 bis 5, wobei die Mittel zur Impedanzprüfung Mittel zum elektrischen Anschluss, die dazu geeignet sind, mit dem Anschluss des Kopfhörers derart zusammenzuwirken, dass ein elektrischer Strom durch das Kabel des Kopfhörers durchgelassen wird, und Mittel zur Impedanzmessung umfassen.

7. Vorrichtung nach einem der Ansprüche 1 bis 6, wobei die Mittel zur Audioprüfung Mittel zum elektrischen Anschluss an den Anschluss des Kopfhörers, und Mittel, die dazu geeignet sind, ein Signal mit einer bestimmten Frequenz zu senden, sowie zwei Mikrofone, die dazu geeignet sind, den Schall, der von den Hörern des Kopfhörers ausgegeben wird, aufzunehmen, umfassen.

8. Vorrichtung nach einem der Ansprüche 1 bis 7, wobei die Reinigungsmittel Blasmittel umfassen.

9. Vorrichtung nach einem der Ansprüche 1 bis 8, wobei die Reinigungsmittel Bürstmittel umfassen.

10. Vorrichtung nach einem der Ansprüche 1 bis 9, wobei die Reinigungsmittel Mittel zum Auftragen einer Desinfektionslösung, wie einer wässrig-alkoholischen Lösung, umfassen.

11. Vorrichtung nach den Ansprüchen 9 und 10, wobei die Mittel zum Auftragen einer desinfizierenden Lösung dazu geeignet sind, die Bürstmittel mit der Desinfektionslösung zu tränken.

12. Vorrichtung nach einem der Ansprüche 1 bis 4 und 6 bis 11, wobei die Mittel (5) zum Aufrollen des Kabels des Kopfhörers einen Wagen (50) umfassen, der auf Mittel zum Führen in vertikaler Verschiebung gelagert ist, wobei der Wagen (50) von Gegengewichten im Gleichgewicht gehalten wird, wobei eine Gabel, die Finger (51) umfasst, drehbar auf dem Wagen (50) gelagert und dazu geeignet ist, drehbar auf ihrer Achse von einem Motor betätigt zu werden, um das Aufrollen des Kabels (13) zu veranlassen.

13. Vorrichtung nach einem der Ansprüche 1 bis 12, die eine Vorrichtung zum Ablegen eines Bindeelements (61) aufweist, das dazu geeignet ist, ein Bindeelement auf dem Kabel, das von den Mitteln zum Aufrollen des Kabels des Kopfhörers aufgerollt wird, anzuordnen.

14. Vorrichtung nach einem der Ansprüche 1 bis 13, die Mittel, insbesondere pneumatische oder robotertechnische Mittel aufweist, um die Kopfhörer, die bei einem Impedanzprüfungstest, der von den Mitteln zur Impedanzprüfung umgesetzt wird, und/oder einem Audioprüftungstest, der von den Mitteln zur Audioprüfung umgesetzt wird, versagt haben, abzuführen, oder auch, um die Kopfhörer nach den Vorgängen des Aufrollens, Ablegen des Bindeelements oder des Reinigens abzuführen, falls diese nicht ordnungsgemäß ausgeführt wurden.

15. Anlage, die eine oder mehrere Vorrichtungen nach einem der Ansprüche 1 bis 14 und Verpackungsmittel umfasst, die dazu geeignet sind, die von der Vorrichtung oder den Vorrichtungen geprüften und gereinigten Kopfhörer zu verpacken.

## Claims

1. A device for controlling and cleaning wired audio headsets, each audio headset comprising a headband, two earphones and an electrical cable connected to the earphones and ending in a plug, **characterised in that** said device comprises:
- impedance control means (2);
- audio control means (3);
- means (4) for cleaning said headsets;
- means (5; 5') for winding up the cable of the headset
and wherein the impedance control, audio control, cleaning and headset cable winding means are disposed in different successive positions, said device having conveying means capable of routing the headsets to the different positions, comprising two conveyor belts parallel to each other, one called the first conveyor (6), being capable of receiving the headband/earphones assembly of the headset positioned astride said first conveyor and the other one, called second conveyor (7), the socket of said headset, said two conveyor belts (6, 7) being synchronised and spaced apart from each other so as to allow the cable to be freely suspended under the action of its weight between the two conveyor belts (6, 7).

2. The device according to claim 1, having a progressive edge (63) comprising two guides, on either side of the first conveyor (6), intended to engage with the headband near the earphones (12) in order to open the headset, the device having means for clamping the headset on the first conveyor (6), disposed above the first conveyor (6) and intended to cooperate with the progressive edge (63) when the headset is opened.

3. The device according to claim 2 wherein the headset clamping means comprise an upper edge intended to press on the headset.

4. The device according to claim 2 wherein the means for clamping the headset on the first conveyor comprise a third conveyor (8), called upper conveyor, disposed above the first conveyor (6), synchronised with the first conveyor, so that said upper conveyor crushes and clamps the headband of the headset when opening the headset.

5. The device according to one of claims 1 to 4, wherein the means (5') for winding the headset comprise:
- rotary fixtures (70'), on board said second conveyor (7), the upper part of each of the rotary fixtures, intended to receive the headset socket being mounted rotationally freely with respect to the belt of said second conveyor (7),
- one, or preferably, several motorised drive systems (50', 50"), positioned in fixed positions above the second conveyor (7), intended to be engaged, during the phases of stopping the second conveyor (7), with each of the rotary fixtures to cause their rotation and thus the winding of the cable on supports (72') of the rotary fixture (70'),

6. The device according to one of claims 1 to 5, wherein the impedance control means comprise electrical connection means capable of cooperating with the headset socket so as to pass an electric current through the cable of said headset and impedance measuring means;

7. The device according to one of claims 1 to 6 wherein the audio control means comprise means for electrical connection to the headset socket, and means capable of sending a signal of a determined frequency as well as two microphones capable of picking up the sound emitted by the earphones of said headset.

8. The device according to one of claims 1 to 7, wherein the cleaning means comprise blowing means.

9. The device according to one of claims 1 to 8, wherein the cleaning means comprise brushing means.

10. The device according to one of claims 1 to 9, wherein the cleaning means comprise means for applying a disinfectant solution such as a hydro-alcoholic solution.

11. The device according to claims 9 and 10, the means for applying a disinfectant solution are capable of impregnating the brushing means with said disinfectant solution.

12. The device according to one of claims 1 to 4 and 6 to 11, wherein the means (5) for winding the headset cable comprise a carriage (50) mounted on vertical translational guide means, the carriage (50) being balanced by counterweights, a fork comprising fingers (51) being mounted in rotation on said carriage (50), capable of being actuated in rotation on its axis by a motor in order to cause the cable (13) to be wound up.

13. The device according to one of claims 1 to 12 having a device for placing a link (61), capable of disposing a link on the cable wound by said headset cable winding means.

14. The device according to one of claims 1 to 13 having means, in particular pneumatic or robotic means, for removing the headsets that have failed an impedance control test implemented by said impedance control means and/or an audio control test implemented by said audio control means, or else to remove the headsets after winding, twist deposition or cleaning operations if the latter have not been carried out correctly.

15. An installation comprising one or more devices according to one of claims 1 to 14 and packaging means capable of conditioning the headsets controlled and cleaned by said device(s).
